# EUROPEAN PATENT APPLICATION

(11) **EP 1 517 302 A1**
(43) Date of publication of application: **23.03.2005**
(21) Application number: 04020066.9
(22) Date of filing: 24.08.2004
(51) Int. Cl.: G11B 5/48, G11B 5/60

(54) **Suspension assembly and magnetic disk drive**

(30) Priority: 05.09.2003 JP 2003313425
(71) Applicant: Hitachi Global Storage Technologies B. V., 01 AZ Amsterdam (NL)
(72) Inventor: Inoue, Hiroo, Fujisawa-shi Kanagawa, 252-0804 (JP); Nakamura, Taichi, Sagamihara-shi Kanagawa, 252-0803 (JP); Nakao, Kohji, Yamato-shi Kanagawa, 242-0007 (JP); Sera, Akihiro, Fujisawa-shi Kanagawa, 251-0057 (JP)
(74) Representative: Kirschner, Klaus Dieter, Dipl.-Phys.

(57) **Abstract**

A compact hard disk drive that operates silently at a low power consumption needs a suspension assembly that places a low load on the magnetic head. A suspension assembly 104 comprises a head arm 10 mounted on a carriage shaft 105, a load beam 20 capable of placing load on a magnetic head 3 and serving as a beam, and a flexure assembly 30. The flexure assembly 30 includes a flexure 31 formed by processing a thin metal sheet, an insulating layer 32 laminated to the flexure 31, a wiring pattern 33 formed on the insulating layer 32, and a protective layer 34 coating the wiring pattern 33. The flexure 31 has a flexible part 310 for placing load on the magnetic head 3, a gimbals 311 to which the magnetic head 3 is attached, and a base part 312 attached to the head arm 10. The elastic part 310 of the flexure 31 generates a very load in the range of about 0.5 to about 1 g.

## Description

The present invention relates to a suspension assembly for a magnetic disk drive and, more particularly, to a suspension assembly suitable for use in a compact disk drive, consisting of a comparatively small number of parts, and exerting a low load on a magnetic disk.

Various types of portable storage mediums are provided for various devices including personal computers (PC) and digital cameras to store data. Efforts have been made in recent years to provide storage mediums having a small size and a large storage capacity. A portable hard disk drive (HDD) of new assembly construction based on the Compact Flash® commercially available from Sun Disk Co., i.e., one of standards for small memory cards, has been proposed.

For example, a compact HDD conforming to Compact Flash Type 2 standards is a large-capacity HDD provided with a 1 in. diameter magnetic disk having a storage capacity of 1 GB, and having a weight of only on the order of 16 g.

The portable, compact HDD comprises, in addition to the magnetic disk for storing data, a spindle motor for driving the magnetic disk for rotation, a magnetic head for writing data to and reading data from the magnetic disk, a suspension assembly supporting the magnetic head, and an actuator for driving the suspension assembly to move the magnetic head across the magnetic disk.

The progressive miniaturization of the HDD requires the improvement of the accuracy of the suspension supporting the magnetic head, i.e., a mechanical part. A suspension assembly disclosed in Patent document JP-A 2001-155458, (p. 3, Fig. 2) has a flexible part formed by shaping a plate spring, and a load beam. A suspension assembly disclosed in Patent document U.S. Pat. No. 6381099 (Columns 3 and 4, Fig. 1) has a load beam formed by connecting a base part and a rigid part by an elastic part.

Low noise generation and low power consumption are important requirements for a portable, compact HDD to be incorporated into a portable device.

Therefore, the compact HDD must be provided with a small spindle motor, the spindle motor must operate at a low rotating speed, and large load cannot be placed on the magnetic head. The suspension assemblies mentioned in Patent documents 1 and 2 exerts an excessively high load through the magnetic head on the magnetic disk. Consequently, the small spindle motor is unable to rotate the magnetic disk, and thereby the rotor is dislocated relative to the stator to damage the bearing sup-porting the rotor.

Thus, a compact HDD that generates low noise and operates at a low power consumption needs a suspension assembly that exerts a low load on the magnetic disk. Desirably, the suspension assembly comprises a small number of parts and has simple construction.

Accordingly, it is an object of the present invention to provide a suspension arm suitable for use in a compact HDD and capable of preventing exerting a large load on a magnetic disk.

Another object of the present invention is to provide a compact magnetic disk drive capable of silently operating at a low power consumption.

To achieve the object, a suspension assembly according to the present invention comprises: a flexure assembly formed by processing a thin metal sheet, and having a flexible part and a gimbals formed in a tip part of the flexible part; a head arm connected to a base part, oppo-site the tip part provided with the gimbals, of the flexible part of the flexure assembly; and a load beam attached to the tip part provided with the gimbals of the flexure assembly; wherein load on the flexible part of the flexure assembly is in the range of 0.5 to 1 g.

The flexible part is in or near a middle part of the flexure assembly, or the flexible part lies between the head arm attached to the flexure assembly, and the load beam attached to the flexure assembly.

The load beam has flanges extending along its opposite longitudinal sides, a dimple is formed near the tip of the load beam, and a lift tab is formed at the tip of the load beam.

The head arm has a flat part attached to the flexure assembly, and a mounting part mounted on a carriage turning shaft.

To achieve the object, a suspension assembly comprises a flexure assembly including a flexure formed by processing a thin metal sheet, and having a flexible part that produces a load in the range of 0.5 to 1 g and a gimbals formed in a tip part thereof, an insulating layer laminated to the flexure, a wiring pattern formed on the insulating layer, and a protective layer coating the wiring pattern; a head arm connected to a base part, opposite the tip part provided with the gimbals, of the flexible part of the flexure assembly; and a load beam attached to the tip part, provided with the gimbals, of the flexure assembly.

The flexible part preferably is in or near a middle part of the flexure, or the flexible part lies between the head arm attached to the flexure assembly, and the load beam attached to the flexure assembly.

The load beam preferably has flanges extending along its opposite longitudinal sides, a dimple is formed near the tip of the load beam, and a lift tab is formed at the tip of the load beam.

The head arm preferably has a flat part attached to the flexure assembly, and a mounting part mounted on a carriage turning shaft.

To achieve the object, a magnetic disk drive comprises a suspension assembly comprising a flexure assembly formed by processing a thin metal sheet and having a flexible part that produces a load in the range of 0.5 to 1 g and a gimbals formed in a tip part thereof, a head arm connected to a base part, opposite the tip part provided with the gimbals, of the flexible part of the flexure assembly, and a load beam attached to the tip part, provided with the gimbals, of the flexure assembly; a magnetic head attached to the gimbals; and a magnetic disk to which the magnetic head writes information and from which the magnetic head reads information.

To achieve the object, a magnetic disk drive comprises a suspension assembly comprising a flexure assembly including a flexure formed by processing a thin metal sheet and having a flexible part that produces a load in the range of 0.5 to 1 g and a gimbals formed in a tip part thereof, an insulating layer laminated to the flexure, a wiring pattern formed on the insulating layer and a protective layer coating the wiring pattern, a head arm connected to a base part, opposite the tip part provided with the gimbals, of the flexible part of the flexure assembly, and a load beam attached to the tip part, provided with the gimbals, of the flexure assembly; a magnetic head attached to the gimbals; and a magnetic disk to which the magnetic head writes information and from which the ma-gnetic head reads information.

The suspension assembly according to the present invention is suitable for use in a com-pact HDD and capable of preventing exerting high load on the magnetic disk. The magnetic disk drive according to the present invention is capable of silently opera-ting at a low power consumption.

Advantageous embodiments of the invention are characterized in the sub-claims, and are now described with reference to the drawings in which:
Fig. 1 is a top view of a suspension assembly in a preferred embodiment according to the present invention and its component members; and
Fig. 2 is a perspective view of a compact hard disk drive provided with the suspension assembly in the preferred embodiment.

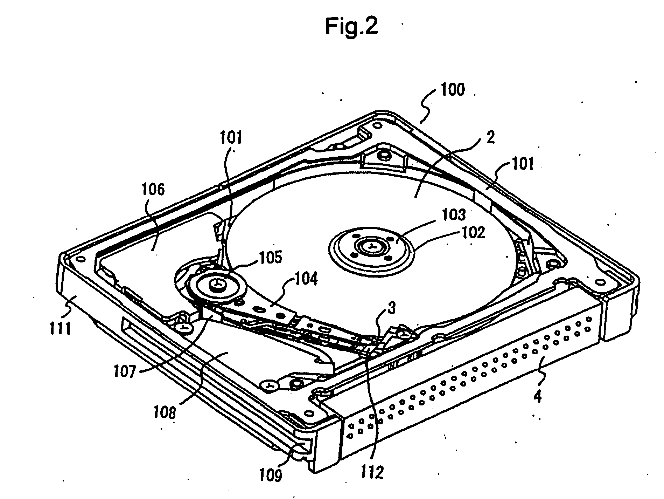

A best mode for carrying out the present invention will be described with reference to the accompanying drawings. Fig. 2 shows a compact disk drive 100, conforming to Compact Flash Type 2 standards, provided with a suspension assembly 104 in a preferred embodiment according to the present invention. The external dimensions of the disk drive 100 are 42.8 mm x 36.4 mm x 5 mm. A recording medium is a 1 in. diameter magnetic disk 2. A box-shaped base 101 is formed by press working. A spindle motor, not shown, is installed fixedly on the bottom wall of the base 101. The spindle motor is provided with fluid dynamic bearings (FDBs). The magnetic disk 2 is mounted on and fastened with a top clamp 103 to a spindle 102.

The suspension assembly 104 is mounted on a carriage shaft 105 pivotally supported on the bottom wall of the base 101. A voice coil motor (VCM) 106 fixedly installed on the bot-tom wall of the base 101 drives the suspension assembly 104 for turning to move a magnetic head 3 held on a tip part of the suspension assembly 104 across the magnetic disk 2 so that the magnetic head 3 is positioned at a position coinciding with a desired recording track for writing information to and reading information from the magnetic disk 2.

Signal lines connect the magnetic head 3 electrically to a flexible printed circuit board (FPCB) 107. The FPCB 107 is connected electrically to a connector, not shown, connected to a flexible cable (FC) 108 connected to a wiring board, not shown, connected to an interface connector 4. A connector connected to an external device is connected to the interface connector 4 to transmit signals provided by the magnetic head 3 to the external device.

Frame bumper 111, i.e., a shock-absorbing member, is attached to the external side surfaces of the base 101. The frame bumper 111 is a molding provided with side slots 109 con-forming to Compact Flash type 2 standards. Thus, the external side surfaces of the base 101 are covered with the frame bumper 111 and the interface connector 4 to protect the compact disk drive 100 from lateral shocks.

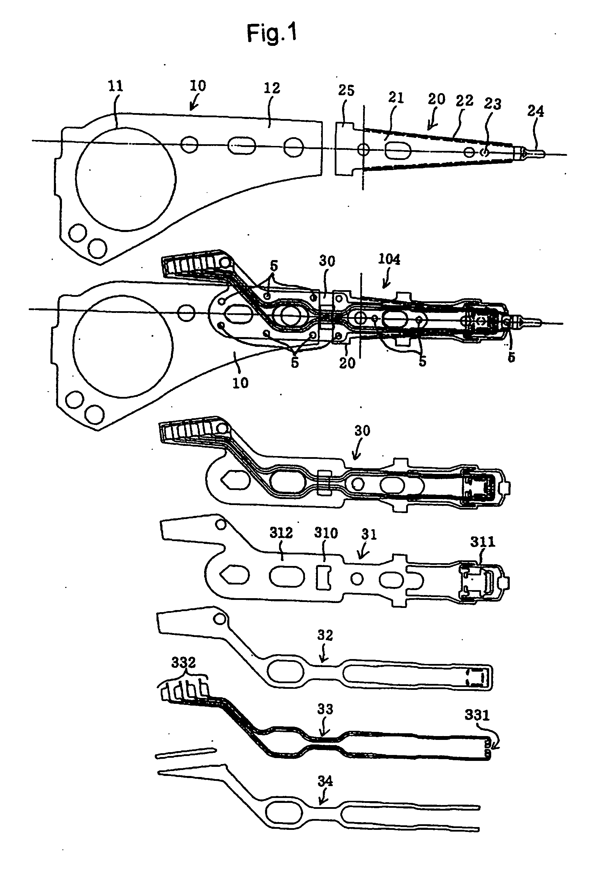

Fig. 1 is a top view of the suspension assembly 104 and the component members of the same. Fig. 1 shows the suspension assembly in a top view taken from the side of the magnetic disk 2. Hidden lines of the component members are indicated by continuous lines to facilitate understanding the positional relation between the component members. The suspension assembly 104 comprises a mount plate (head arm) 10 to be mounted on the carriage shaft 105, a load beam 20 that places load on the magnetic head 3, and a flexure assembly 30 that generates load to be placed on the magnetic head and holds the magnetic head 3.

The head arm 10 has a base part 11 provided with an opening to receive the carriage shaft 105, and an arm part 12. The flexure assembly 30 is attached to the arm part 12 of the head arm 10. The load beam 20 has a rigid part 21 provided with flanges 22 formed by bending longitudinal side parts of the load beam 20 into the paper to enhance the rigidity of the rigid part 21, a dimple 23 formed in the rigid part 21 and serving as a fulcrum for the motion of the magnetic head 3, a lift tab 24 necessary for loading/unloading the magnetic head 3, and a base part 25 attached to the flexure assembly 30.

The flexure assembly 30 comprises a flexure 31 formed by processing a thin metal sheet, an insulating layer 32 laminated to the flexure 31, a wiring pattern 33 formed on the insulating layer 32, and a protective layer 34 covering the wiring pattern 33.

The flexure 31 has an elastic part 310 that generates load to be placed on the magnetic head 3, a gimbals 311 to which the magnetic head 3 is attached, and a base part 312 attached to the head arm 10. The insulating layer 32 is formed of a resin, such as a polyimide resin. The wiring pattern 33 includes two wiring lines for the write head of the magnetic head 3, two wiring lines for the read head of the magnetic head 3, terminals 331 connected to the magnetic head 3, and terminals 332 connected to the FPCB 107. The protective layer 34 is formed of a resin, such as a polyimide resin.

The head arm 10 and the load beam 20 are arranged as shown in an upper part of Fig. 1, the flexure assembly 30 is extended on the head arm 10 and the load beam 20, and parts 5 of the flexure 31 are welded to the head arm 10 and the load arm 20 by laser welding to complete the suspension assembly 104. Then, the elastic part 310 of the flexure 31 is bent away from the paper (toward the magnetic disk). Thus, the suspension assembly 104 places load on the magnetic head 3 when the magnetic head 3 is loaded on the rotating magnetic disk 2.

Although the elastic part 310 of the flexure 31 is bent to place load on the magnetic head 3 in this embodiment, the load is very small and in the range of about 0.5 to about 1 g because the flexure 31 is formed by processing a thin plate that can form the gimbals 311 and has a low rigidity. Incidentally, the conventional flexure formed of an elastic material places a load of 3 g or above on the magnetic head.

Since the spindle motor is loaded through the magnetic disk with a very low load of 1 g or below, the spindle motor will not become unable to operate even if the spindle motor is a small one that operates at a low rotating speed. Since the magnetic disk is not excessively loaded, the rotor does not come into partial contact with the stator even if the rotor is supported in a FDB, and the bearing is not damaged.

Since the load to be placed on the magnetic head is generated by the elastic part of the flexure in this embodiment, any additional elastic member is not necessary, which reduces the number of parts. Thus, the suspension assembly is suitable for use in a compact magnetic disk drive.

## Claims

1. A suspension assembly comprising:
a flexure assembly formed by processing a thin metal sheet, and having a flexible part that produces a load in the range of 0.5 to 1 g and a gimbals formed in a tip part of the flexible part;
a head arm connected to a base part, opposite the tip part provided with the gimbals, of the flexible part of the flexure assembly; and
a load beam attached to the tip part provided with the gimbals of the flexure assembly.

2. The suspension assembly according to claim 1, wherein the flexure assembly includes an insulating layer laminated to the flexure, a wiring pattern formed on the insulating layer, and a protective layer coating the wiring pattern.

3. The suspension assembly according to claim 1 or 2, wherein the flexible part is in or near a middle part of the flexure.

4. The suspension assembly according to claim 1 or 2, wherein the flexible part lies between the head arm attached to the flexure assembly, and the load beam attached to the flexure assembly.

5. The suspension assembly according to claim 1 or 2, wherein the load beam has flanges extending along its opposite longitudinal sides, a dimple is formed near the tip of the load beam, and a lift tab is formed at the tip of the load beam.

6. The suspension assembly according to claim 1 or 2, wherein the head arm has a flat part attached to the flexure assembly, and a mounting part mounted on a carriage turning shaft.

7. A magnetic disk drive comprising a magnetic head and a magnetic disk to which the magnetic head writes information and from which the magnetic head reads information and a suspension assembly according to any of the claims 1 to 6, wherein the a magnetic head is attached to the gimbals.
